# DEMANDE DE BREVET EUROPEEN

(11) **EP 1 145 997 A1**
(43) Date de publication de la demande: **17.10.2001**
(21) Numéro de dépôt: 00201323.3
(22) Date de dépôt: 13.04.2000
(51) Int. Cl.: B65G 47/14

(54) **Dispositif pour orienter convenablement des pièces issues d'un bol de centrifugation à plateau rotatif et ceinture statique, et ensemble comprenant un tel bol équipé d'un tel dispositif**

(71) Demandeur: Thomas Electronique S.A., 2108 Couvet (CH)
(72) Inventeur: Bernauer, Thomas, 2000 Neuchâtel (CH)
(74) Mandataire: Ravenel, Thierry Gérard Louis

(57) **Abrégé**

Ce dispositif (15) pour orienter convenablement des pièces (4) issues d'un bol de centrifugation (3) à plateau rotatif (5) et ceinture statique (7) est remarquable en ce qu'il comprend des moyens de convoyage (25) destinés à être placés à la périphérie dudit bol afin d'évacuer les pièces (4) expulsées vers cette périphérie sous l'effet de la rotation dudit plateau (5).

Application à l'orientation de petites pièces dans un contexte de fabrication industrielle à cadences élevées.

## Description

La présente invention se rapporte à un dispositif pour orienter convenablement des pièces issues d'un bol de centrifugation à plateau rotatif et ceinture statique, ainsi qu'à un ensemble comprenant un tel bol équipé d'un tel dispositif.

On connaît du document US 3,828,921 un dispositif du type susmentionné.

Le dispositif enseigné par ce document comprend un simple rail destiné recevoir les pièces sortant du bol et à les conduire jusqu'à un poste permettant de les orienter convenablement.

Les pièces sont censées progresser dans le rail de ce dispositif sous l'effet de l'énergie cinétique qui leur a été transmise par le plateau rotatif du bol, et sous l'effet de la poussée qu'elles exercent les unes sur les autres à l'entrée de ce rail.

On constate en pratique que ce dispositif ne fonctionne correctement que pour une plage de vitesses de rotation du plateau du bol relativement faibles.

Au delà de cette plage, des problèmes de bourrage apparaissent fréquemment, et ce notamment lorsque l'une des dimensions des pièces à orienter est très différente des deux autres.

Or, dans certaines industries, de tels problèmes peuvent être prohibitifs.

C'est le cas par exemple pour la fabrication de systèmes d'irrigation en goutte-à-goutte, dans laquelle on extrude des conduites en matière plastique auxquelles on incorpore à intervalles réguliers des petites pièces appelées « goutteurs» comme cela est décrit dans la demande de brevet EP 0 715 926.

Lorsque de tels goutteurs sont approvisionnés par un dispositif du type susmentionné et qu'il se produit un bourrage, on perd facilement plusieurs mètres de conduite extrudée avant de remédier au problème, ce qui alourdit les coûts de fabrication.

La présente invention a pour but de remédier à ces inconvénients.

On atteint ce but de l'invention avec un dispositif pour orienter convenablement des pièces issues d'un bol de centrifugation à plateau rotatif et ceinture statique, remarquable en ce qu'il comprend des moyens de convoyage destinés à être placés à la périphérie dudit bol afin d'évacuer les pièces expulsées vers cette périphérie sous l'effet de la rotation dudit plateau.

Grâce à ces caractéristiques, ce dispositif permet d'extraire très rapidement les pièces se présentant à la sortie du bol de centrifugation, évitant ainsi les problèmes de bourrage susmentionnés lorsque le plateau rotatif de ce bol tourne à vitesse élevée.

Suivant d'autres caractéristiques du dispositif selon l'invention :
- lesdits moyens de convoyage comprennent une courroie de convoyage,
- lesdits moyens de convoyage comprennent au moins une section en montée suivie d'une section en palier,
- ce dispositif comprend une rampe statique destinée à assurer la continuité du trajet desdites pièces entre ledit plateau rotatif et lesdits moyens de convoyage,
- ce dispositif comprend des moyens de tri destinés à renvoyer dans ledit bol celles desdites pièces qui ne présentent pas ladite orientation prédéterminée,
- lesdits moyens de tri comprennent un premier poste de tri destiné à être placé directement à la sortie dudit bol,
- ledit premier poste de tri est placé le long de ladite rampe statique,
- lesdits moyens de tri comprennent en outre un deuxième poste de tri placé en aval dudit premier poste de tri,
- ce dispositif comprend une gaine destinée à relier ledit deuxième poste de tri audit bol,
- lesdits moyens de tri comprennent des moyens de jet d'air,
- lesdits moyens de tri comprennent des moyens de détrompeur,
- lesdits moyens de détrompeur sont situés sur ladite rampe statique.

La présente invention a également pour objet un ensemble pour orienter de manière prédéterminée des pièces fournies en vrac, remarquable en ce qu'il comprend un bol de centrifugation à plateau rotatif et ceinture statique équipé d'un dispositif conforme à ce qui précède.

Suivant d'autres caractéristiques de cet ensemble :
- l'axe de rotation dudit plateau est incliné par rapport à la verticale d'un angle pouvant être situé dans une plage allant de 5 à 20 degrés,
- la face supérieure dudit plateau définit sensiblement un tronc de cône de révolution autour de l'axe de rotation de ce plateau,
- ladite ceinture statique est surmontée d'un anneau formant couvercle.

D'autres caractéristiques et avantages de la présente invention apparaîtront à la lecture de la description qui va suivre et à l'examen du dessin annexé, dans lequel :
- la figure 1 est une vue en perspective d'un ensemble comprenant un bol de centrifugation et un dispositif d'orientation selon l'invention, cet ensemble étant couplé à un accumulateur de pièces convenablement orientées,
- la figure 2 est une vue en perspective de la zone de liaison entre le bol de centrifugation et le dispositif de la figure 1,
- la figure 3 est une section selon le plan P3 de la figure 2 d'un premier poste de tri du dispositif d'orientation selon l'invention, et
- la figure 4 est une section selon le plan P4 de la figure 2 d'un deuxième poste de tri du dispositif selon l'invention.

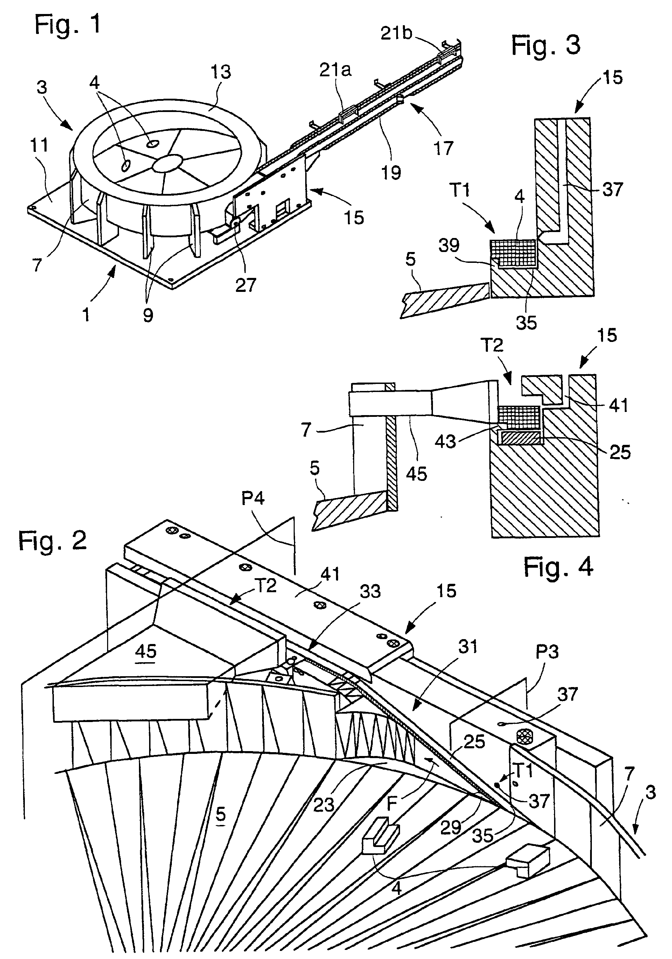

On se reporte à présent à la figure 1, sur laquelle on voit que l'ensemble 1 selon l'invention comprend un bol de centrifugation 3 destiné à recevoir des pièces 4 à orienter de manière prédéterminée.
Ce bol de centrifugation 3 comprend un plateau rotatif 5 entouré d'une ceinture statique 7 supportée par des montants 9 eux-mêmes supportés par une embase 11. La ceinture statique 7 est de préférence elle-même surmontée d'un anneau formant couvercle 13.

De préférence, le plateau rotatif 5 est monté pivotant autour d'un axe incliné par rapport à l'horizontale d'un angle pouvant être situé dans une plage allant de 5 à 20 degrés.

De préférence également (et comme cela est connu en soi), la face supérieure du plateau 5 définit sensiblement un tronc de cône de révolution autour de l'axe susmentionné.

L'ensemble 1 comprend par ailleurs un dispositif d'orientation 15 selon l'invention qui sera décrit plus en détail ci-après.

Dans la configuration de la figure 1, ce dispositif d'orientation est relié à un accumulateur de pièces convenablement orientées 17 pouvant comprendre un rail 19 recouvert par une pluralité de couvercles 21a, 21b... amovibles, cet accumulateur s'étendant par exemple jusqu'à un poste (non représenté) d'extrusion de conduites en matière plastique dans l'hypothèse où l'ensemble 1 est utilisé dans la fabrication de systèmes d'irrigation du type mentionné plus haut.

On se reporte à présent à la figure 2, sur laquelle on a représenté plus en détail une partie du bol 3 ainsi que du dispositif d'orientation 15 selon l'invention, le couvercle 13 ayant été ôté pour plus de clarté.

Comme cela apparaît sur cette figure, la ceinture statique 7 est localement interrompue au droit du dispositif d'orientation 15, définissant ainsi une fenêtre 23.

Lorsque l'axe de rotation du plateau 5 est incliné par rapport à la verticale, cette fenêtre 23 est placée au droit de la partie la plus haute de la circonférence de ce plateau.

Selon une caractéristique de l'invention, le dispositif d'orientation 15 comprend des moyens de convoyage tels qu'une courroie de convoyage 25 montée sur des galets dont certains 27, 29 sont visibles respectivement sur les figures 1 et 2, l'un au moins de ces galets étant couplé à des moyens d'entraînement à la portée de l'homme du métier tels qu'un moteur électrique (non représenté).

Ces moyens d'entraînement sont adaptés pour faire circuler la courroie de convoyage 25 dans le sens de la flèche F indiquée sur la figure 2.

La courroie de convoyage 25 est agencée dans le dispositif d'orientation 15 de manière à s'étendre à partir de la fenêtre 23 selon une direction sensiblement tangentielle à la périphérie du plateau rotatif 5.

De préférence, cette courroie est agencée de manière à définir une section en montée 31 puis une section en palier 33 à partir de la fenêtre 23.

De préférence, et comme cela est également visible sur la figure 3, le dispositif d'orientation 15 comprend également une rampe statique 35 disposée de manière à former un chemin continu entre la périphérie du plateau rotatif 5 et la courroie de convoyage 25.

En se reportant à présent à la fois aux figures 2 et 3, on voit que le dispositif d'orientation 15 peut également comprendre un premier poste de tri T1 situé le long de la rampe statique 35.

On notera que l'agencement de la fenêtre 23, de la rampe 35 et de la courroie de convoyage 25 permet la séparation d'une première rangée de pièces s'appuyant contre la ceinture statique d'une deuxième rangée de pièces s'appuyant contre la première rangée de pièces, ce qui permet notamment d'éliminer l'anneau périphérique rotatif de l'art antérieur.

Pour ce faire, la largeur de la rampe 35 et la largeur de la courroie de convoyage 25 sont bien entendu sensiblement égales à la largeur des pièces à trier de sorte que les pièces de la deuxième rangée sont automatiquement renvoyées dans le bol et ne viennent pas perturber le tri des pièces de la première rangée. Selon une variante de réalisation non représentée, la largeur de la rampe 35 et de la courroie de convoyage 25 peut être réglable afin de pouvoir adapter le dispositif de l'invention au tri de pièces de différentes largeurs.

Ce premier poste de tri peut comprendre, typiquement, au moins une buse 37 susceptible d'envoyer un jet d'air sous pression, ainsi qu'un détrompeur 39 situé sur la rampe statique 35 et dont la forme est adaptée à celle des pièces 4 à orienter convenablement.

En se reportant à présent à la fois aux figures 2 et 4, on voit que le dispositif d'orientation 15 peut également comprendre un deuxième poste de tri T2 placé en aval du premier poste de tri T1 et de préférence, le cas échéant, dans la section en palier 33 de la courroie de convoyage 25.

De même que le premier poste de tri T1, ce deuxième poste de tri T2 peut comprendre, typiquement, au moins une buse 41 susceptible d'envoyer un jet d'air sous pression, ainsi qu'un détrompeur 43 dont la forme est adaptée à celle des pièces 4.

Il va de soi que selon des variantes de réalisation, les jets d'air sous pression peuvent être remplacés par d'autres moyens tels que des moyens mécaniques adaptés à la forme des pièces à trier.

Le dispositif d'orientation 15 comprend en outre une gaine 45 disposée de manière à relier le deuxième poste de tri T2 au bol de centrifugation 3.

Le mode de fonctionnement et les avantages de l'invention découlent directement de la description qui précède.

Les pièces 4 à orienter de manière prédéterminée, qui peuvent par exemple être des goutteurs pour système d'irrigation goutte-à-goutte (voir plus haut), arrivent en vrac sur le plateau rotatif 5 par exemple au moyen d'une trémie (non représentée) débouchant au centre de ce plateau (voir figure 1).

Sous l'effet de la rotation de ce plateau (dont la vitesse circonférentielle peut typiquement varier entre 70 et 150 m/min), les pièces 4 sont expulsées en direction de la ceinture statique 7, le couvercle 13 empêchant ces pièces de quitter intempestivement le bol 3.

Celles de ces pièces qui sont situées dans la zone de la fenêtre 23 arrivent ainsi sur la courroie 25 (laquelle se déplace typiquement à une vitesse comprise entre 25 et 50 m/min) après avoir transité, le cas échéant, par la rampe statique 35. On notera que cette vitesse dépend du taux de probabilité de pièces orientées convenablement.

L'inclinaison optionnelle du plateau rotatif 5 par rapport à l'horizontale permet d'éviter une accumulation trop importante des pièces 4 au droit de la fenêtre 23, et ainsi de réduire les risques de bourrage.

Le jet d'air envoyé par la buse 37 dans le premier poste de tri T1 (voir figure 3) permet de renvoyer sur le plateau rotatif 5 les pièces 4 qui ne sont pas convenablement orientées et/ou qui sont empilées les unes sur les autres.

Le détrompeur 39 participe à ce tri en positionnant de guingois les pièces 4 qui ne sont pas convenablement orientées, les exposant ainsi au jet d'air envoyé par la buse 37.

Après avoir parcouru la section en montée 31 de la courroie 25, les pièces 4 parcourent ensuite la section en palier 33 de cette courroie.

Elles arrivent ainsi dans le deuxième poste de tri T2 (voir figure 4) où elles subissent un tri analogue à celui du premier poste de tri T1, les pièces qui ne sont pas convenablement orientées étant renvoyées sur le plateau rotatif 5 par l'intermédiaire de la gaine 45.

Les pièces 4 qui ont franchi les premier T1 et deuxième T2 postes de tri sans avoir été renvoyées sur le plateau rotatif 5 sont convenablement orientées ; elles sont alors acheminées par la courroie 25 jusqu'à l'accumulateur 19 (voir figure 1) permettant de stocker ces pièces préalablement à leur utilisation.

Comme on peut le comprendre à présent, le dispositif selon l'invention permet d'extraire très rapidement les pièces à orienter convenablement qui se présentent à la sortie du bol de centrifugation, évitant ainsi les problèmes de bourrage présents dans les dispositifs de la technique antérieure.

Ce dispositif permet de la sorte de fournir des pièces convenablement orientées à des cadences très élevées (typiquement, de l'ordre de 500 pièces par minute), et d'atteindre des rendements nettement supérieurs à ceux de la technique antérieure (de l'ordre de 25% au lieu d'environ 10% habituellement).

A titre indicatif, les rendements obtenus avec le dispositif de l'invention pour le tri des pièces ayant six orientations possibles atteint 25%, ce qui est théoriquement parfait si l'on supprime les pièces debout sur l'un des deux côtés par leur mise à plat dans la mesure où il reste alors quatre possibilités soit 25% de chances d'être orientées correctement. Prenons par exemple des pièces ayant une seule orientation correcte sur six possibilités que l'on introduit dans le dispositif de l'invention. Avec un plateau tournant à une vitesse de 70 m/min; ce qui correspond à 2'000 pièces/min. triées pour une longueur de pièces de 35 mm, on obtient par conséquent un débit de 500 pièces/min. à l'endroit et donc un rendement qui est de 25%. Avec des pièces ayant deux positions correctes sur six possible, le rendement passe à 50%.

En outre, le dispositif selon l'invention comporte des moyens de tri particulièrement simples à mettre en oeuvre, contribuant à l'amélioration desdits rendements.

Bien entendu, la présente invention n'est pas limitée au mode de réalisation décrit et représenté, fourni à titre d'exemple illustratif et non limitatif.

En effet, on peut notamment prévoir, pour augmenter la sécurité du dispositif des moyens de contrôle supplémentaires disposés en aval de la deuxième station de tri et qui permettraient d'éliminer une éventuelle pièce inversée qui aurait pu passer les deux tris. Ces moyens de contrôle peuvent par exemple comprendre un filtre mécanique ayant la forme de la pièce orientée convenablement, associé à des moyens de détection optique. Lorsqu'une pièce mal orientée se présente devant le filtre, celle-ci est arrêtée et l'arrêt est détecté par les moyens de détection optique par exemple une barrière lumineuse qui commande alors la production d'un jet d'air pour renvoyer la pièce dans le bol.

Grâce à ces moyens additionnels, il est possible d'assurer que 100% des pièces envoyées dans l'accumulateur sont orientées convenablement.

## Revendications

1. Dispositif (15) pour orienter convenablement des pièces (4) issues d'un bol de centrifugation (3) à plateau rotatif (5) et ceinture statique (7), **caractérisé en ce qu'**il comprend des moyens de convoyage (25) destinés à être placés à la périphérie dudit bol afin d'évacuer les pièces (4) expulsées vers cette périphérie sous l'effet de la rotation dudit plateau (5).

2. Dispositif (15) selon la revendication 1, **caractérisé en ce que** lesdits moyens de convoyage comprennent une courroie de convoyage (25).

3. Dispositif (15) selon l'une des revendications 1 ou 2, **caractérisé en ce que** lesdits moyens de convoyage (25) comprennent au moins une section en montée (31) suivie d'une section en palier (33).

4. Dispositif (15) selon l'une quelconque des revendications 1 à 3, **caractérisé en ce qu'**il comprend une rampe statique (35) destinée à assurer la continuité du trajet desdites pièces (4) entre ledit plateau rotatif (5) et lesdits moyens de convoyage (25).

5. Dispositif (15) selon l'une quelconque des revendications 1 à 4, **caractérisé en ce qu'**il comprend des moyens de tri (T1, T2) destinés à renvoyer dans ledit bol (3) celles desdites pièces (4) qui ne présentent pas ladite orientation prédéterminée.

6. Dispositif (15) selon la revendication 5, **caractérisé en ce que** lesdits moyens de tri (T1, T2) comprennent un premier poste de tri (T1) destiné à être placé directement à la sortie dudit bol (3).

7. Dispositif (15) selon les revendications 4 à 6, **caractérisé en ce que** ledit premier poste de tri (T1) est placé le long de ladite rampe statique (35).

8. Dispositif (15) selon l'une des revendications 6 ou 7, **caractérisé en ce que** lesdits moyens de tri (T1, T2) comprennent en outre un deuxième poste de tri (T2) placé en aval dudit premier poste de tri (T1).

9. Dispositif (15) selon la revendication 8, **caractérisé en ce qu'**il comprend une gaine (45) destinée à relier ledit deuxième poste de tri (T2) audit bol (3).

10. Dispositif (15) selon l'une quelconque des revendications 5 à 9, **caractérisé en ce que** lesdits moyens de tri (T1, T2) comprennent des moyens de jet d'air (37, 41).

11. Dispositif (15) selon l'une quelconque des revendications 5 à 10, **caractérisé en ce que** lesdits moyens de tri (T1, T2) comprennent des moyens de détrompeur (39, 43).

12. Dispositif (15) selon la revendication 10 lorsqu'elle dépend de la revendication 7, **caractérisé en ce que** lesdits moyens de détrompeur (39) sont situés sur ladite rampe statique (35).

13. Ensemble (1) pour orienter de manière prédéterminée des pièces (4) fournies en vrac, **caractérisé en ce qu'**il comprend un bol de centrifugation (3) à plateau rotatif (5) et ceinture statique (7) équipé d'un dispositif (15) conforme à l'une quelconque des revendications précédentes.

14. Ensemble (1) selon la revendication 13, **caractérisé en ce que** l'axe de rotation dudit plateau (5) est incliné par rapport à la verticale d'un angle pouvant être situé dans une plage allant de 5 à 20 degrés.

15. Ensemble (1) selon l'une des revendications 13 ou 14, **caractérisé en ce que** la face supérieure dudit plateau (5) définit sensiblement un tronc de cône de révolution autour de l'axe de rotation de ce plateau

16. Ensemble (1) selon l'une quelconque des revendications 13 à 15, **caractérisé en ce que** ladite ceinture statique (7) est surmontée d'un anneau formant couvercle (13).
